(19) Europäisches Patentamt
European Patent Office
Office européen des brevets

(11) **EP 4 524 831 A1**

(12) **EUROPEAN PATENT APPLICATION**

(43) Date of publication:
**19.03.2025 Bulletin 2025/12**

(21) Application number: **23197135.9**

(22) Date of filing: **13.09.2023**

(51) International Patent Classification (IPC):
**G06N 20/00** (2019.01)   $G06N\ 3/0455$ (2023.01)
**G06N 3/0464** (2023.01)   $G06N\ 3/047$ (2023.01)
**G06N 3/0475** (2023.01)   $G06N\ 7/01$ (2023.01)

(52) Cooperative Patent Classification (CPC):
**G06N 20/00; G06V 10/764; G06V 10/774;**
**G06V 20/52;** G05B 23/024; G06N 3/0455;
G06N 3/0464; G06N 3/047; G06N 3/0475;
G06N 7/01; G06V 2201/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Schmedding, Sabrina**
**75233 Tiefenbronn (DE)**
• **Wang, Ruyu**
**71229 Leonberg (DE)**

(54) **METHOD AND DEVICE FOR TRAINING A MACHINE LEARNING SYSTEM**

(57)     A computer implemented method of training a first machine learning system for object classification by optimizing an objective function, using a set of training data, wherein said first machine learning system is trained based on said objective function, comprising a guidance term that measures a similarity between a span of feature representations in a feature space of said first machine learning system and a corresponding span of feature representations in a feature space of a second machine learning system for object classification.

Fig. 1

**Description**

Technical field

The invention relates to a method of training a machine learning system for object classification, to a corresponding training system, a computer program, and a machine-readable storage medium.

Technical background

In industrial scenarios, automated visual inspection such as anomaly detection is a crucial task for multiple reasons like quality control, cost saving, and predictive maintenance. However, collecting sufficient defective samples to train a model for automated anomaly detection is not only time-consuming but sometimes even infeasible because production lines are also optimized to reduce defects. Recently, the advancement of deep generative machine learning systems (also referred to as: deep generative models) provides a new way for acquiring defective images. However, despite looking realistic to human eyes, the performance boost of a machine learning system trained with such synthetic defective images is usually not on par with that of a machine learning system trained with real-world images, i.e. images recorded by a physical sensor. The invention disclosed herein aims to improve the effectiveness of synthetic data generated by deep generative models in the training of a machine learning system.

In arXiv:2104.02290 [cs.CV] a method of training a machine learning system with synthetically generated data is proposed, which shall mitigate the system's performance drop when used on real-world data and which shall hence improve the model's generalization ability in inference. To this end, feature representations similar to those from real-world data, e.g. from ImageNet, are learned and feature representations of different synthetic samples are pushed apart to prevent them from collapsing.

Disclosure of the invention

According to a first aspect, the invention relates to a computer implemented method of training a first machine learning system for object classification by optimizing an objective function. The method comprises the step of receiving a set of training data. According to a further method step the first machine learning system is trained based on the aforementioned objective function with the received set of training data using a gradient-based optimization. The training is characterized in that the objective function comprises a guidance term. In addition, the objective function comprises a task-specific loss term, which may be a task-specific loss function, e.g. a cross-entropy loss for a classification task. The objective function may comprise a sum of the task-specific loss term and the guidance term. The guidance term measures a similarity between a span of feature representations in a feature space of said first machine learning system and a corresponding span of feature representations in a feature space of a second machine learning system for object classification. The similarity is determined between spans of feature representations which have been determined with the same inputs. In other words, both the first and the second machine learning system receive as inputs the same input sensor signals from the set of training data and each of the two machine learning systems maps the input sensor signals onto feature representations of the respective input sensor signals in a feature space of the respective model. The similarity between the span of the feature representations in a feature space of the first model and the span of feature representations in a feature space of the second model is then determined. The second machine learning system may differ from the first machine learning system. For instance, the number of parameters of the first and the second machine learning system may be different and/or the structure and the underlying algorithms may differ among the two models. However, the inference task for first and second machine learning system shall be similar, for instance, in inference both machine learning systems shall classify objects based on real-world input sensor signals (in other words, input sensor signals, recorded by a physical sensor). Preferably, the second machine learning system is pretrained on input sensor signals from a physical sensor. In particular, the second machine learning system may be pretrained on a large-scale dataset comprising real-world data only, i.e. non-synthetic but data actually recorded by a physical sensor, and hence will load the parameters as obtained from the pretraining on said large-scale dataset. In particular, the pretrained weights of the second machine learning system are not updated but remain frozen during the method of training the first machine learning system as described herewith.

In other words, by means of the guidance term, a teacher-student approach is established. Several advantages of the proposed method can be identified. First, the architecture of the second, pretrained machine learning system does not need to be identical to that one of the first machine learning system. In particular, the number of parameters of the first and the second machine learning system may differ, as well as the underlying structure and/or algorithms of first and second machine learning system. This allows to choose the architecture of the first machine learning system to be particularly suited for the envisaged inference task even in cases where no pretrained weights from large-scale models on the same chosen structure/architecture are available, such that the second machine learning system necessarily would have to have a differing architecture. Second, the herewith proposed method does not force the features of the first and second machine learning system to be similar, but instead lets the first machine learning system freely learn the feature representations itself without an unnecessary pushing towards the feature representations of the pretrained second system. Furthermore, the proposed method is independent of the way of initialization of the two machine learning system. In particular, the first machine learning model may be trained from scratch without the need of loading pretrained weights. This implies that while it may be initialized randomly or some or all parameters may be loaded from a pretrained machine learning system, the parameters of the first machine learning system will be updated to solve the target task as comprised by optimizing the objective function.

Preferably, the set of training data comprises synthetically generated input sensor signals. The synthetically generated input sensor signals may be generated, for instance, by a GAN (Generative Adversarial Network), a VAE (Variational Autoencoder) or a DPM (diffusion probabilistic model). Preferably, the set of training data comprises primarily synthetically generated input sensor signals. In some embodiments, the set of training data may comprise only synthetically generated input sensor signals. In other embodiments, the set of training data may additionally comprise input sensor signals recorded by a physical sensor, while primarily comprising synthetically generated input sensor signals. The set of training data may, for instance, be received from a database or from a cloud storage.

As supported by the above arguments, an improved solution to the problem of overcoming the domain gap of a machine learning system primarily trained on synthetically generated input sensor signals, is provided based on the features of the method of training the first machine learning system described above.

It is worth to recall that the domain gap may be described as the difference - in particular the drop - in performance of a machine learning system predominantly trained with synthetically generated training data as compared to another machine learning system predominantly trained with real-world data, when both machine learning systems are trained for and perform the same inference task on the same "real-world data".

Preferably, the set of training data comprises synthetically generated input sensor signals and at least one input sensor signal recorded by a physical sensor. The synthetically generated input sensor signals may be generated, for instance, by a GAN (Generative Adversarial Network), a VAE (Variational Autoencoder) or a DPM (diffusion probabilistic model). The number of synthetically generated input sensor signals may significantly exceed the number of input sensor signals recorded by a physical sensor in the set of training data. For instance, the set of training data may comprise 100 or 1000 input sensor signals recorded by a physical sensor but may comprise 10000 or more synthetically generated input sensor data. In other words, the portion of input sensor data recorded by a physical sensor in the set of training data may be smaller than 10%. In a step of the gradient-based optimization, then, a first gradient of said objective function is determined, wherein the objective function is evaluated with a synthetically generated input sensor signal out of the set of training data. Further, a second gradient of said objective function is determined, wherein the objective function is now evaluated with an input sensor signal recorded by a physical sensor. The first gradient, corresponding to a synthetically generated input sensor signal, is then modified to a modified first gradient according to a direction of the second gradient in parameter space. Furthermore, a weighted sum of the first modified and the second gradient is formed. This weighted sum of gradients is used in a step of updating the parameters of the first machine learning model in the gradient-based optimization.

In other words, when updating the parameters within the gradient-based optimization, the direction of the second gradient, which is based on the objective function evaluated for an input sensor signal recorded with a physical sensor, serves as a guidance for the direction of the modified first gradient. In course of the optimization procedure, a minimum (or maximum, depending on the definition of the optimization task) of the objective function shall be determined, that will provide best performance in inference, i.e. when real-world input sensor data are received by the first machine learning system after training. By using the direction of the second gradient as a guidance, effects from a possible negative transfer of the synthetic data in the training of the first machine learning system may be corrected or removed. In particular, the modified gradient should not point in a direction opposite to the direction given by the second gradient.

The aforementioned aspects of the computer-implemented training method provide an efficient solution to the problem of providing a machine learning system trained primarily on synthetic data, wherein possible negative transfer effects from training with synthetic data are removed and wherein the trained machine learning system gives rise to an improved overcoming of the domain gap.

Preferably, the modified first gradient is a projection of the first gradient, wherein the projection of the first gradient contains no components anti-parallel to the direction of the second gradient. This has the advantage that the second gradient suggested by the real-world input sensor data, which presumably may roughly point in the direction of the assumed minimum or maximum of the objective function is not corrupted or diminished by components of first gradients corresponding to synthetically generated input sensor data, that point in the opposite direction (i.e. are anti-parallel) to that of the second gradient.

Preferably, the modified first gradient contains only those components of the first gradient, which are orthogonal and/or parallel to the second gradient. Hence, to obtain the modified first gradient from the first gradient, the first gradients components anti-parallel to the second gradient are removed. In this way, all those components in gradients corresponding to synthetically generated input sensor data are kept and hence contribute in the step of updating the parameters in the steepest gradient-decent, which do not point in the direction anti-parallel to the second gradient.

Preferably, the modified first gradient is weighted by a first hyperparameter and the second gradient is weighted by a second hyperparameter in the weighted sum of the modified first gradient and the second gradient. In this way, the effect of a gradient referring to synthetically generated input signals and the impact of the gradient referring to a real-world input sensor signal may be adjusted independently. For instance, the effect of gradients from synthetical data may be different in different epochs of the training; while at the beginning of the training a guidance by gradients of real-world data may be more important for a fast convergence, in later epochs, already closer to the desired extremum of the objective function, the impact of synthetic input sensor signals in the gradient-based optimization may be increased to catch also specific effects provided by only the synthetic data. Specific effects may, for instance, be provided by rare sensor signals, that may only be contained in the synthetic data, simply due to the pure number of synthetical input sensor signals as compared to the real-world sensor signals. Similarly, the impact of the real-world data in the steepest-gradient decent step may be adjusted in different training epochs by adjustment of the second hyperparameter.

Generally, it may be noted that while steps or parts of the proposed method are described with reference to a first gradient and a second gradient, referring to a synthetically generated input sensor signal and an input sensor signal generated by a physical sensor, the method is not limited to the comparison between only one first gradient to one second gradient. In general, several gradients, each referring to a synthetically generated input sensor signal, may be evaluated and may be compared to the same second gradient referring to a real-world input sensor signal. For instance, the set of training data may be divided into several batches, each batch containing a single up to a few real-world input sensor signals and at least a factor 100, 1000 or 10000 more synthetically generated input sensor signals. A batch may then be subdivided into several sets of similar size, wherein each set contains one real-world input sensor signal. Accordingly, the gradients of the synthetically generated input sensor signals from a given set may then be compared to the "second" gradient, which refers to the input sensor signal generated by a physical sensor of said set.

In other words, by modifying a first gradient according to a direction of a second gradient, a guidance by the second gradient is provided, which can be used to regularize the direction of gradient updated of synthetic sample. For instance, in each iteration of the training of the first machine learning system, a batch of real-world sample may be first passed through the system and their respective gradients may be computed. Then a batch of synthetic samples may also be passed through the same model and their respective gradient may be acquired. All gradients from synthetic samples that have an angle larger that 90 to the gradients of the real-world samples may then be projected in a direction that is orthogonal to the gradients from real-world samples.

For instance, given gradient $g_r$ referring to a real-world sample and given gradient $g_f$ referring to a synthetically generated input sensor signal, a modified, in this case projected, gradient $g_{modified}$ may be obtained as

$$g_{modified} = \begin{cases} g_f - \dfrac{g_f^T g_r}{g_r^T g_r} \cdot g_r & , \quad if \ g_f^T g_r < 0 \\ g_f & , \qquad otherwise. \end{cases}$$

The parameters of the first machine learning system may then be updated with the "regularized" gradients by using a gradient $g_{update}$ in the step of parameter adjustment in steepest-gradient decent, given by

$$g_{update} = \lambda_1 \cdot g_{modified} + \lambda_2 \cdot g_r .$$

Thereby, $\lambda_1, \lambda_2$ denote a first and a second hyperparameter adjustable to further modulate the impact of synthetic and/or real-world input sensor signals in each training epoch.

Preferably, the span of the feature representations of said first and second machine learning system, respectively, is determined based on the pairwise distances of the respective feature representations corresponding to the input sensor signals from the set of training data. In particular, for each training iteration, a batch of input sensor signals out of the set of training data may be passed through both the first and the second machine learning system and corresponding feature representations $f_u$ of the first and $f_p$ of the second machine learning system may be computed by the respective system for each input sensor signal (u: untrained, p: pretrained). Then the pairwise distance between the representations of the input sensor signals may be calculated by a distance metric, forming a distance matrix for each machine learning system, separately. The corresponding distance matrices may be written as

$$D_u^{ij} = \delta\big(f_u(i), f_u(j)\big), \qquad D_p^{ij} = \delta\Big(f_p(i), f_p(j)\Big),$$

where $D_u$, $D_p$ stands for the distance matrices of the first and the second machine learning system, respectively, while $i,j$ indicate different input sensor signals out of the batch in a specific training iteration and $\delta(\cdot)$ stands for any distance metric.

Preferably, a pairwise distance of feature representations is determined by the cosine similarity of the respective feature representations in feature space of the first or the second machine learning system. Accordingly, the distance metric generically denoted by $\delta(\cdot)$ above may be chosen to be the cosine similarity metric.

Preferably, the similarity between the span of feature representations of the first machine learning model and the span of feature representations of the second machine learning model is determined by the L1 metric or the KL divergence. For instance, the similarity metric may be expressed by $sim\{\cdot,\cdot\}$, such that the guidance term $L_{pg}$ may be chosen by

$$L_{pg} = \sum_i \sum_j sim\{D_p^{ij}, D_u^{ij}\},$$

where $D_u$, $D_p$ stand for distance matrices of the first and the second machine learning system, respectively, and $i,j$ indicate different input sensor signals out of a batch of training data in a specific training iteration. It is understood that a summation over all input sensor signals in the batch is carried out. A final objective for the training of the first machine learning system may then be given by

$$L = L_{Task} + \lambda_3 \cdot L_{pg}$$

wherein $L$ denotes the objective function, denotes $L_{Task}$ an inference task-specific term in the objective function and $\lambda_3$ is a hyperparameter to tune the strength of the guidance term.

Preferably, the sensor signals are digital signal data and the feature representations of the first and the second machine learning system are determined based on pixel attributes of the digital signal data. Digital signal data may, for instance be given by digital image data. A pixel may be an elementary cell or raster point of e.g. a digital camera image or video camera image, a Radar point cloud, LiDAR point cloud or an ultrasound image, wherein a multitude of such elementary cells or raster points may be arranged, for instance in a grid, to form a digital image, a digital video image at a given point in time, a radar point cloud, LiDAR point cloud or an ultrasound image. A pixel attribute may be a characteristic of an elementary cell or raster point specifying e.g. a color, a greyscale, a transparency or an intensity. Hence, a pixel attribute of a given pixel may be assigned a numeric value to determine a color, a greyscale value, a transparency index or an intensity value of the corresponding pixel.

Preferably, the sensor signal data may be sensed or synthetical digital data from a camera, video, Radar, LiDAR or ultrasound sensor.

Preferably, the feature space of said first machine learning system may differ from the feature space of said second machine learning system. Hence, the architecture of the first and the second machine learning system do not need to be identical. Particularly, an architecture of the first machine learning system to be trained may be chosen freely based on its inference task despite there may be no available pretrained weights from large-scale models on the same structure. The choice of the architecture of the first machine learning system is hence rendered independent of the architecture of the second machine learning system. This would not be the case, if the feature space of said first and second machine learning model should be identical, which would pose the constrained that pretrained weights - preferably pretrained on a large dataset - for the desired structure of the first model have to be available in order to obtain a "teacher" second machine learning system.

Preferably, the first machine learning system may be used for optical inspection or controlling a manufacturing line or machine after training. Accordingly, the training task of the first machine learning system may comprise a classification task. The classification task may e.g. be a task-specific cross-entropy loss for classification. The classification may be a classification of manufactured goods in optical inspection or a classification of a state of a manufacturing line or machine for controlling a manufacturing line or a machine.

According to a further aspect, the invention relates to a system, which is configured to carry out the training method according to steps and/or features described above.

According to a further aspect, the invention relates to a computer program with machine-readable instructions, which, when executed on one or several computer(s), cause the computer(s) to perform one of the computer-implemented methods described above and below. Furthermore, according to another aspect, the invention relates to a machine-readable storage medium, on which the above computer program is stored.

It may be noted in general, that input sensor signals recorded by a physical sensor may be referred to as real-world input sensor data throughout the description.

Embodiments of the invention will be discussed with reference to the following figures in more detail. The figures show:

Figure 1    a training system for training the first machine learning system;
Figure 2    a control system comprising a machine learning system controlling an actuator in its environment;
Figure 3    a flow chart for a method of training the first machine learning system.

Description of the embodiments

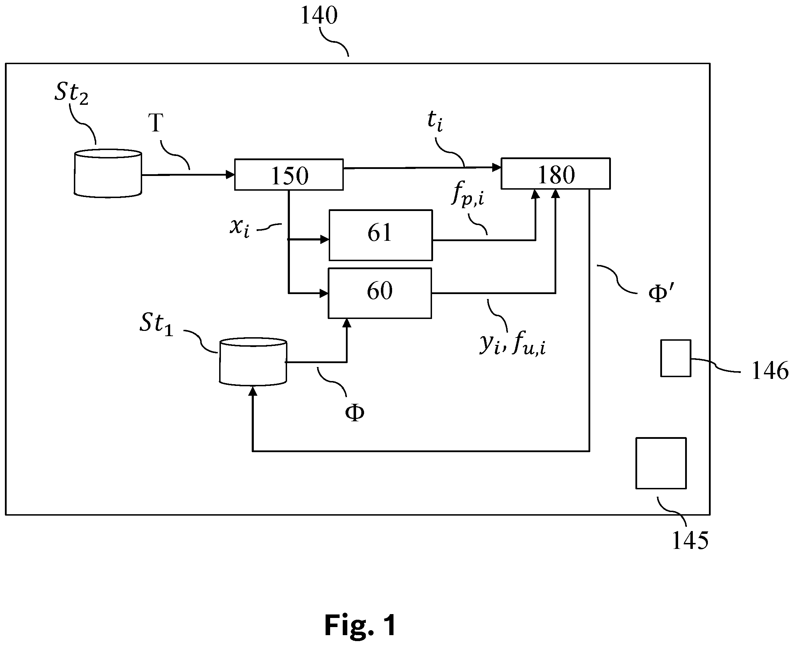

Figure 1 shows an embodiment of a training system 140 for training a first machine learning system 60 by means of a training data set T. The training data set T comprises a plurality of input sensor signals $x_i$ which are used for training the first machine learning system 60, wherein the training data set T further comprises, for each input sensor signal $x_i$, a desired output signal $t_i$ which corresponds to the input signal $x_i$ and characterizes a classification of the input signal $x_i$. Training data set T comprises synthetically generated input sensor signals $x_i$. According to a sub-embodiment, training data set T may comprise only synthetically generated sensors signals $x_i$. In other sub-embodiments, the training data set primarily comprises synthetically generated sensor signals and at least one input sensor signal $x_i$ recorded by a physical sensor.

For training, a training data unit 150 accesses a computer-implemented database $St_2$, the database $St_2$ providing the training data set T. The training data unit 150 determines from the training data set T preferably randomly a batch comprising at least two input signals $x_i$ and the desired output signals $t_i$ corresponding to the input signals $x_i$ and transmits the input signals $x_i$ to the first machine learning system 60 and to the second machine learning system 61. For each input signal $x_i$ in the batch, the first machine learning system 60 determines a feature representation $f_{u,i}$ in a feature space of the first machine learning system 60.

Similarly, the second machine learning system 61 determines a feature representation $f_{p,i}$ of input signal $x_i$ in a feature space of the second machine learning system 61. Additionally, the first machine learning system determines an output signal $y_i$ based on the input signal $x_i$.

For each input signal $x_i$ comprised in the batch, the desired output signal $t_i$ and the output signal $y_i$, determined by the first machine learning system 60, are transmitted to a modification unit 180. In addition, for each input signal $x_i$ comprised in the batch, feature representation $f_{u,i}$ of input signal $x_i$, determined by the first machine learning system 60, and feature representation $f_{p,i}$, determined by the second machine learning system 61, each corresponding to input signal $x_i$, are transmitted to modification unit 180.

Based on the desired output signals $t_i$, on the determined output signals $y_i$, on the feature representations $f_{u,i}$ and $f_{p,i}$, the modification unit 180 then determines new parameters $\Phi'$ for the machine learning system 60. For this purpose, the modification unit 180 uses an objective function comprising a sum of an inference-specific loss term, e.g. a cross-entropy loss for classification, and a guidance term. Specifically, the modification unit 180 compares the desired output signal $t_i$ and the output signal $y_i$ determined by the first machine learning system using the inference task-specific loss function. The inference task-specific loss function determines a first loss value that characterizes how far the determined output signal $y_i$ deviates from the desired output signal $t_i$. Additionally, modification unit 180 measures a similarity between the span of feature representations $f_{u,i}$ in a feature space of first machine learning system 60 and a corresponding span of feature representations $f_{p,i}$ in a feature space of second machine learning system 61 using a guidance term and considering the input signals $x_i$ comprised by the batch.

It should be noted that the parameters of machine learning system 61 are pretrained parameters, which are loaded from a database or a storage and which remain frozen/are not adjusted during the training of the first machine learning system 60. In particular, machine learning system 61 is a pretrained system, pretrained on a data set comprising only or at least primarily real-world data, i.e. input sensor signals recorded from one or several physical sensors. For instance, machine learning system 61 may be given by a pretrained resnet-50 pretrained on ImageNet.

The modification unit 180 determines the new parameters $\Phi'$ based on a, preferably averaged, first loss value comprising an average of the loss values corresponding to the input singals $x_i$ comprised in the batch and based on the value of the guidance term as determined from the feature representations of the input signals $x_i$ in the batch. In the given embodiment, this may be done using a gradient descent method, preferably stochastic gradient descent, Adam, or AdamW.

In preferred embodiments, the set of training data T comprises synthetically generated input sensor signals and at least one input sensor signal recorded from a physical sensor. In such embodiments, a first gradient of the objective function is determined, wherein the objective function is evaluated with a synthetically generated input sensor signal, and a second gradient of said objective function is determined, with said objective function being evaluated with an input sensor signal recorded by a physical sensor. Modification unit 180 then modifies the first gradient to a modified first gradient according to a direction of the second gradient. A weighted sum of the modified first gradient and the second gradient is then formed by modification unit 180, wherein said weighted sum of gradients is used in determining the new parameters $\Phi'$ of the first machine learning model in the gradient-based optimization.

In other preferred embodiments, the described training is repeated iteratively for a predefined number of iteration steps or repeated iteratively until the first loss value and the guidance term value falls below respective predefined threshold values. Alternatively, or additionally, it is also conceivable that the training is terminated when an average first loss value with respect to a test or validation data set falls below a predefined threshold value and when the guidance term falls below predefined threshold value. In at least one of the iterations the new parameters $\Phi'$ determined in a previous iteration are used as parameters $\Phi$ of the first machine learning system 60.

Furthermore, the training system 140 may comprise at least one processor 145 and at least one machine-readable storage medium 146 containing instructions which, when executed by the processor 145, cause the training system 140 to execute a training method according to one of the aspects of the invention.

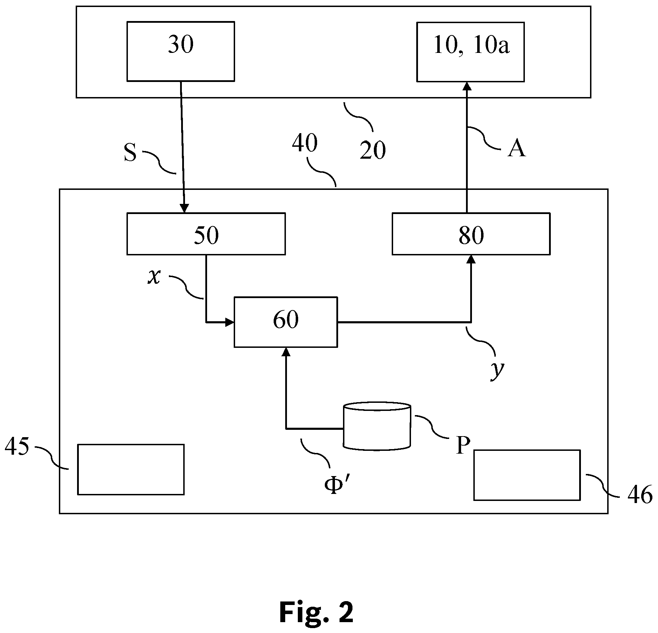

Figure 2 shows an embodiment of an actuator 10 in its environment 20. The actuator 10 interacts with a control system 40. The actuator 10 and its environment 20 will be jointly called actuator system. At preferably evenly spaced points in time, a sensor 30 senses a condition of the actuator system. The sensor 30 may comprise several sensors. Preferably, the sensor 30 is an optical sensor that takes images of the environment 20. An output signal S of the sensor 30 (or, in case the sensor 30 comprises a plurality of sensors, an output signal S for each of the sensors) which encodes the sensed condition is transmitted to the control system 40.

Thereby, the control system 40 receives a stream of sensor signals S. It then computes a series of control signals A depending on the stream of sensor signals S, which are then transmitted to the actuator 10.

The control system 40 receives the stream of sensor signals S of the sensor 30 in an optional receiving unit 50. The receiving unit 50 transforms the sensor signals S into input signals x. Alternatively, in case of no receiving unit 50, each sensor signal S may directly be taken as an input signal x. The input signal x may, for example, be given as an excerpt from the sensor signal S. Alternatively, the sensor signal S may be processed to yield the input signal x. In other words, the input signal x is provided in accordance with the sensor signal S.

The input signal x is then passed on to a first machine learning system 60.

The first machine learning system 60 is parametrized by parameters $\Phi$, which are stored in and provided by a parameter storage $St_1$.

The first machine learning system 60 determines an output signal y from the input signals x. The output signal y comprises information that assigns one or more labels to the input signal x. The output signal y is transmitted to an optional conversion unit 80, which converts the output signal y into the control signals A. The control signals A are then transmitted to the actuator 10 for controlling the actuator 10 accordingly. Alternatively, the output signal y may directly be taken as control signal A.

The actuator 10 receives control signals A, is controlled accordingly and carries out an action corresponding to the control signal A. The actuator 10 may comprise a control logic which transforms the control signal A into a further control signal, which is then used to control actuator 10.

In further embodiments, the control system 40 may comprise the sensor 30. In even further embodiments, the control system 40 alternatively or additionally may comprise an actuator 10.

In still further embodiments, it can be envisioned that the control system 40 controls a display 10a instead of or in addition to the actuator 10.

Furthermore, the control system 40 may comprise at least one processor 45 and at least one machine-readable storage medium 46 on which instructions are stored which, if carried out, cause the control system 40 to carry out a method according to an aspect of the invention.

The sensor 30 may comprise one or more video sensors and/or one or more radar sensors and/or one or more ultrasonic sensors and/or one or more LiDAR sensors. The input signal x may hence be understood as an input image and the first machine learning system as an image classifier.

The first machine learning system 60 may be configured to detect objects based on the input image x. The output signal y may comprise an information, which characterizes where objects are located. The control signal A may then be determined in accordance with this information, for example to avoid collisions with the detected objects.

Control system 40 may be used to control a manufacturing machine, e.g., a punch cutter, a cutter, a gun drill or a gripper, of a manufacturing system, e.g., as part of a production line. The manufacturing machine may comprise a transportation device, e.g., a conveyer belt or an assembly line, which moves a manufactured product. The control system 40 may controls an actuator, which in turn controls the manufacturing machine.

The sensor may be given by an optical sensor which captures properties of, e.g., a manufactured product. The first machine learning system 60 may hence be understood as an image classifier.

The first machine learning system 60 may determine a position of the manufactured product with respect to a transportation device. An actuator may then be controlled depending on the determined position of the manufactured product for a subsequent manufacturing step of the manufactured product. For example, it may be envisioned that the machine learning system classifies, whether the manufactured product is broken and/or exhibits a defect. An actuator may then be controlled as to remove the manufactured product from the transportation device.

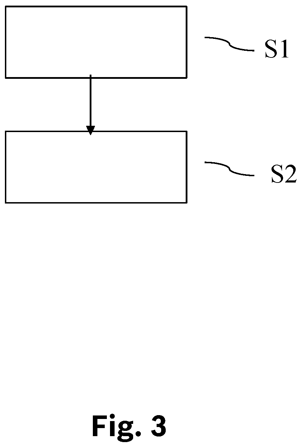

Figure 3 shows a flow chart of a method of training a first machine learning system 60. In step S1 a set of training data T is received by the machine learning system 60. The set of training data comprises synthetically generated input sensor signals. The set of training data may comprise synthetically generated input sensor data only. In other embodiments, the set of training data may comprise synthetically generated input sensor signals and at least one input sensor signal recorded by a physical sensor. In step S2, a training of the first machine learning system is carried out based on an objective function with the received set of training data using a gradient-based optimization. The objective function comprises a guidance term, wherein the guidance term measures a similarity between a span of feature representations in a feature space of said first machine learning system and a corresponding span of feature representations in a feature space of a second machine learning system for object classification, wherein the similarity is determined between spans of feature representations which have been determined with the same inputs.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer implemented method of training a first machine learning system for object classification by optimizing an objective function,
   the method comprising the following steps:

   - Receiving a set of training data,
   - Training said first machine learning system based on said objective function with the received set of training data using a gradient-based optimization, **characterized in that**

   said objective function comprises a guidance term, wherein the guidance term measures a similarity between a span of feature representations in a feature space of said first machine learning system and a corresponding span of feature representations in a feature space of a pretrained second machine learning system for object classification, wherein the similarity is determined between spans of feature representations which have been determined with the same inputs.

2. Method according to claim 1, wherein the set of training data comprises synthetically generated input sensor signals and at least one input sensor signal recorded by a physical sensor, wherein in a step of the gradient-based optimization a first gradient of said objective function is determined, with said objective function being evaluated with a synthetically generated input sensor signal, and a second gradient of said objective function is determined, with said objective function being evaluated with an input sensor signal recorded by a physical sensor, wherein the first gradient is modified to a modified first gradient according to a direction of the second gradient, wherein a weighted sum of the modified first gradient and the second gradient is formed, and wherein said weighted sum of gradients is used in a step of updating the parameters of the first machine learning model in the gradient-based optimization.

3. Method according to claim 2, wherein the modified first gradient is a projection of the first gradient, wherein the projection of the first gradient contains no components anti-parallel to the direction of the second gradient.

4. Method according to claim 3, wherein the modified first gradient contains only those components of the first gradient orthogonal and/or parallel to the second gradient.

5. Method according to one of the claims 2, 3 or 4, wherein the modified first gradient is weighted by a first hyperparameter and the second gradient is weighted by a second hyperparameter in the weighted sum of the modified first gradient and the second gradient.

6. Method according to any one of the preceding claims, wherein the span of the feature representations of said first and second machine learning system, respectively, is determined based on the pairwise distances of the respective feature representations corresponding to the input sensor signals from the set of training data.

7. Method according to claim 6, wherein a pairwise distance of feature representations is determined by the cosine similarity of the respective feature representations in feature space of the first or the second machine learning system.

8. Method according to any one of the preceding claims, wherein the similarity between the span of feature representations of the first machine learning model and the span of feature representations of the second machine learning model is determined by the L1 metric or the KL divergence.

9. Method according to any one of the preceding claims, wherein the sensor signals are digital signal data and the feature representations of the first and the second machine learning system are determined based on pixel attributes of the digital signal data.

10. Method according to any one of the preceding claims, wherein the sensor signal data are sensed or synthetical digital data from a camera, video, Radar, LiDAR or ultrasound sensor.

11. Method according to any one of the preceding claims, wherein the feature space of said first machine learning system differs from the feature space of said second machine learning system.

12. Method according to any one of the preceding claims, wherein the first machine learning system is used for optical inspection or controlling a manufacturing line or machine after training.

13. System configured to carry out the method according to any one of the claims 1 to 12.

14. Computer program that is configured to cause a computer to carry out the method according to any one of the claims 1 to 12 with all of its steps if the computer program is carried out by a processor.

15. Machine-readable storage medium on which the computer program according to claim 14 is stored.

**Fig. 1**

EP 4 524 831 A1

**Fig. 2**

**Fig. 3**

**Europäisches Patentamt**
**European Patent Office**
**Office européen des brevets**

# EUROPEAN SEARCH REPORT

Application Number

EP 23 19 7135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VU MANH TU ET AL: "Multitask Multi-database Emotion Recognition", 2021 IEEE/CVF INTERNATIONAL CONFERENCE ON COMPUTER VISION WORKSHOPS (ICCVW), IEEE, 11 October 2021 (2021-10-11), pages 3630-3637, XP034028125, DOI: 10.1109/ICCVW54120.2021.00406 [retrieved on 2021-11-08] * Abstract * * p3631-p3634, * * Formula (4), Formula (9) * * figures 1-2 * | 1-15 | INV. G06N20/00  ADD. G06N3/0455 G06N3/0464 G06N3/047 G06N3/0475 G06N7/01 |
| A | XUAN ZHANG ET AL: "DeSTSeg: Segmentation Guided Denoising Student-Teacher for Anomaly Detection", ARXIV.ORG, CORNELL UNIVERSITY LIBRARY, 201 OLIN LIBRARY CORNELL UNIVERSITY ITHACA, NY 14853, 21 November 2022 (2022-11-21), XP091374800, * Abstract * * p1, p4 * * Eq. (2) - Eq. (4) * | 1,2,9, 10,12-15 | |

TECHNICAL FIELDS
SEARCHED (IPC)

G06N

The present search report has been drawn up for all claims

| Place of search | Date of completion of the search | Examiner |
|---|---|---|
| The Hague | 4 March 2024 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)